Europäisches Patentamt

European Patent Office

Office européen des brevets

(19)

(11) Veröffentlichungsnummer: **0 278 572**

**A2**

(12) # EUROPÄISCHE PATENTANMELDUNG

(21) Anmeldenummer: **88200223.1**

(22) Anmeldetag: **09.02.88**

(51) Int. Cl.4: **G02B 6/38 , C03B 37/14**

(30) Priorität: **12.02.87 DE 3704274**

(43) Veröffentlichungstag der Anmeldung:
**17.08.88 Patentblatt 88/33**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT**

(72) Erfinder: **Grzesik, Ulrich, Dr.**
**August-Kierspel-Strasse 161**
**D-5060 Bergisch-Gladbach 2(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) Verfahren zum Verschweissen von nebeneinander liegenden Lichtwellenleiterpaaren.

(57) Die Erfindung betrifft ein Verfahren zum aufeinanderfolgenden Verschweißen einer Mehrzahl eng nebeneinanderliegender Paare von Lichtwellenleitern mittels eines zwischen zwei Schweißelektroden gebildeten Lichtbogens, welcher fortschreitend von der Verbindungsstelle eines Paares zur Verbindungsstelle des folgenden benachbarten Paares bewegt wird. Eine Verbesserung und Vergleichmäßigung der Qualität der Schweißstellen wird dadurch erreicht, daß die Schweißelektroden (4,5) zum Schweißen in einer Stellung angehalten werden, in welcher deren Verbindungsmittellinie zur Mittellinie (7) des zu verschweißenden Paares (2) in einem Abstand verläuft, welcher kleiner als der halbe Abstand zweier benachbarter Paare (1,2, bzw. 2,3) ist.

## Verfahren zum Verschweißen von nebeneinander liegenden Lichtwellenleiterpaaren

Die Erfindung bezieht sich auf ein Verfahren zum aufeinanderfolgenden Verschweißen einer Mehrzahl eng nebeneinanderliegender Paare von Lichtwellenleitern mittels eines zwischen zwei Schweißelektroden gebildeten Lichtbogens, welcher fortschreitend von der Verbindungsstelle eines Paares zur Verbindungsstelle des folgenden benachbarten Paares bewegt wird.

Ein derartiges Verfahren ist beispielsweise durch die DE-OS 33 25 157 bekannt.

Wenn eng benachbarte Lichtwellenleiterpaare, beispielsweise in Form eines Bandes aus nebeneinander verklebten Lichtwellenleitern, einzeln miteinander verschweißt werden sollen, muß die Energiedichte des Lichtbogens auf einen sehr kleinen Raumbereich konzentriert werden. Eine Einwirkung des Lichtbogens auf benachbarte Paare kann dennoch nicht vollständig verhindert werden. Die Erwärmung des bereits vorher verschweißten Paares kann eine die Dämpfung verringernde Temperung bewirken. Das darauf folgend zu verschweißende Paar darf jedoch keineswegs vorzeitig zu stark und insbesondere nicht bis zur Erweichung erwärmt werden.

Beim bekannten Verfahren entstehen unregelmäßige Schwankungen der Schweißqualität, welche zu unerwarteten optischen Zusatzdämpfungen der Schweißverbindungen führen.

Der Erfindung liegt die Aufgabe zugrunde, das Verfahren der eingangs genannten Art derart zu gestalten, daß die Qualität der Schweißstellen vergleichmäßigt und verbessert wird.

Die Lösung gelingt dadurch, daß die Schweißelektroden zum Schweißen in einer Stellung angehalten werden, in welcher deren Verbindungsmittellinie zur Mittellinie des zu verschweißenden Paares in einem Abstand verläuft, welcher kleiner als der halbe Abstand zweier benachbarter Paare ist.

Der Erfindung liegt die Erkenntnis zugrunde, daß der Lichtbogen in zahlreichen Fällen instabil von einer Seite des zu verschweißenden Paares zu seiner anderen Seite wandert. Stabile Lagen ergeben sich unregelmäßig einerseits zwischen dem zu verschweißenden und dem darauffolgend zu verschweißenden Paar oder aber andererseits zwischen dem zu verschweißenden und dem bereits vorher verschweißten Paar. Es wurde erfindungsgemäß erkannt, daß die Unregelmäßigkeiten der Schweißqualität durch die Instabilität des Lichtbogens und die Zufälligkeit dessen Verlaufs begründet sind.

Durch die erfindungsgemäße Lösung wird erreicht, daß der Lichtbogen immer eindeutig und stabil einen gewünschten Verlauf einnimmt.

Als besonders vorteilhaft hat sich erwiesen, daß der Abstand etwa 1/10 bis 1/25 des Abstandes zweier benachbarter Paare beträgt. Dabei ist die Lichtbogenführung einerseits genügend eindeutig und stabil. Andererseits ist dessen Wärmeenergie ausreichend auf das zu verschweißende Paar konzentriert.

Gemäß einer bevorzugten Lösung ist vorgesehen, daß die Schweißelektroden vor dem Erreichen des zu verschweißenden Paares angehalten werden, weil dann eine Temperung des bereits verschweißten Paares erreicht wird, ohne daß das nachfolgend zu verschweißende Paar bereits unzulässig erhitzt wird.

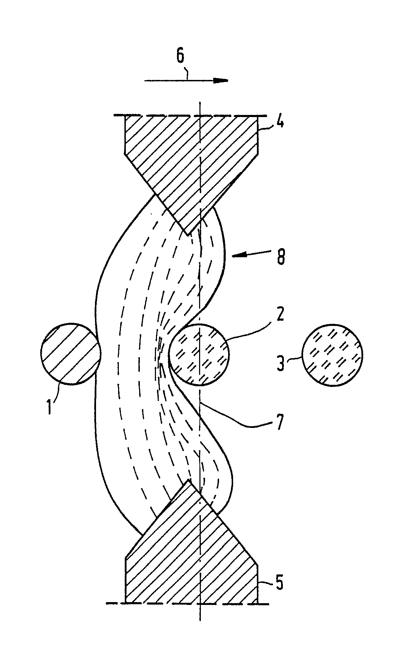

Die Erfindung wird anhand eines in der Zeichnung dargestellten Ausführungsbeispiels erläutert, bei welchem die Elektroden in einer Stellung vor dem zu verschweißenden Paar von Lichtwellenleitern angehalten sind.

Lediglich drei Paare von Lichtwellenleitern sind angedeutet. Mit 1 ist ein Querschnitt durch die bereits verschweißte Verbindungsstelle des ersten Paares, mit 2 und 3 sind die Endflächen je eines der Lichtwellenleiter bezeichnet, die zu einem der noch zu verschweißenden weiteren Paare gehören.

Die Elektroden 4 und 5, welche in Richtung des Pfeils 6 über die Lichtwellenleiterpaare geführt werden, sind für den Schweißvorgang in einer solchen Stellung angehalten, daß sich die Verbindungslinie der Spitzen ihrer kegeligen Endbereiche parallel vor der Mittellinie befindet, die mitten durch das gerade zu verschweißende Paar von Lichtwellenleitern verläuft.

Dabei bildet sich etwa ein Lichtbogen 8 aus, dessen Außenkonturen in der Zeichnung voll ausgezogen sind. Mit gestrichelten Linien, welche zu dem zu verschweißenden Paar von Lichtwellenleitern hin dichter aufeinander folgend gezeichnet sind, soll angedeutet werden, daß die Energiedichte des Lichtbogens 8 auf die Schweißstelle des zweiten Paares konzentriert ist. Eine sehr viel geringere Wärmemenge wird der bereits vorher durchgeführten Schweißstelle des ersten Paares zugeführt, wodurch dort eine Temperung bewirkt wird.

## Ansprüche

1. Verfahren zum aufeinanderfolgenden Verschweißen einer Mehrzahl eng nebeneinanderliegender Paare von Lichtwellenleitern mittels eines zwischen zwei Schweißelektroden gebildeten Lichtbogens, welcher fortschreitend von der Verbindungsstelle eines Paares zur Verbindungsstelle des folgenden benachbarten Paares bewegt wird, dadurch gekennzeichnet, daß die Schweißelektroden (4,5) zum Schweißen in einer Stellung angehalten werden, in welcher deren Verbindungsmittellinie zur Mittellinie (7) des zu verschweißenden Paares (2) in einem Abstand verläuft, welcher kleiner als der halbe Abstand zweier benachbarter Paare (1,2 bzw. 2,3) ist.

2. Verfahren nach Anspruch 1, dadurch gekennzeichnet, daß der Abstand 1/10 bis 1/25 des Abstandes zweier benachbarter Paare (1,2 bzw. 2,3) beträgt.

3. Verfahren nach Anspruch 1 oder 2, dadurch gekennzeichnet, daß die Schweißelektroden (4,5) vor dem Erreichen des zu verschweißenden Paares (2) angehalten werden.